(19)

Europäisches Patentamt

European Patent Office

Office européen des brevets

(11) **EP 2 808 650 B1**

(12) **EUROPEAN PATENT SPECIFICATION**

(45) Date of publication and mention
of the grant of the patent:
**22.03.2017 Bulletin 2017/12**

(51) Int Cl.:
***G01D 3/036*** *(2006.01)*

(21) Application number: **13002822.8**

(22) Date of filing: **31.05.2013**

(54) **Portable electronic device**

Tragbare elektronische Vorrichtung

Dispositif électronique portable

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.12.2014 Bulletin 2014/49**

(73) Proprietor: **Sensirion AG
8712 Stäfa (CH)**

(72) Inventors:
• **Niederberger, Dominik
8055 Zürich (CH)**
• **Sacchetti, Andrea
8051 Zürich (CH)**

• **Böni, Dominic
8157 Dielsdorf (CH)**
• **Graf, Markus
8005 Zürich (CH)**

(74) Representative: **Mirza, Akram Karim
E. Blum & Co. AG
Vorderberg 11
8044 Zürich (CH)**

(56) References cited:
**EP-A1- 2 682 715 WO-A1-2013/045897
US-A1- 2010 268 475 US-A1- 2010 307 916
US-A1- 2011 119 018 US-A1- 2011 307 208
US-B1- 6 203 191**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a portable electronic device with integrated sensors, particularly temperature sensors.

Background of the Invention

Portable or mobile devices originally introduced as mobile phones or electronic agendas become more and more ubiquitous. As the processing power of their internal processors grows and equally the bandwidth for communication with stationary processors, such portable devices take on more and more the role of multi-purpose tools available to consumers and specialist users alike.

It has been recognized that portable devices can benefit from the presence of sensors capable of providing various measurements such as position, orientation, brightness etc. Recently further sensors have been integrated into mobiles phones. These sensors can be referred to as ambient or environmental sensors and include sensors such as temperature, humidity, chemical analysis sensors and the like.

In portable electronic devices such as mobile phones with integrated components such as sensors it can be important to have devices and methods to determine the heat or temperature distribution at various locations within the housing of the device. Particularly in case of a temperature sensor the measurement of the ambient temperature is considered a challenge as internal heat sources distort this particular measurement. It is therefore important for temperature sensors to compensate for offsets caused by internal heat sources of the device. Such offsets can be compensated for by modelling the heat sources, heat flows and heat capacities of the device depending on the actual state of the device and the heat generated by the sources.

It is further known for example from the co-owned published United States patent application no. 2011/0307208 A1 that sensors respond to a sudden change with a change determined not only by the change itself but also by their own response function. The '208 application describes a dynamic compensation of this behaviour of the sensor in order to generate results of the measurements in shorter time than would be possible by simply waiting until the sensor reaches a new steadstate.

In WO 2013/045897 A1, a device is introduced for monitoring the glucose concentration of a blood sample or other temperature-dependent properties of an external sample. The device comprises a temperature sensor for measuring the absolute internal temperature within or adjacent to the device, and a processor for estimating the temperature of the external sample from the measured absolute internal temperature.

According to EP 2 682 715 A1, a temperature sensor is provided in a portable electronic device for sensing an ambient temperature. Components of the device consume electrical power during operation and radiate heat. As a consequence, correct temperature values may not be displayed.

It is suggested to provide a compensator for determining a compensated ambient temperature dependent on at least the sensed ambient temperature and information related to the electrical power consumed by at least one of the components.

In US 2011/119018 A1, an arrangement for estimation of ambient temperature of an electronic device is disclosed. The electronic device comprises a power consuming unit, which is subject to self heating when in use. The arrangement comprises at least a first and a second temperature sensor and a processor. The sensors are adapted to produce first and second temperature measurements as functions of time respectively, and a temperature transport time to the first sensor from the power consuming unit differs from a temperature transport time to the second sensor from the power consuming unit. The processor is adapted to determine an ambient temperature estimate based at least on the first and second temperature measurements as functions of time.

In US 2010/268475 A1, a cavity is disclosed in which an analysis sample is held and measurement is performed. An electrode system is provided for measuring the concentration of the sample in the cavity are provided on a biosensor. A secondary cell and an environment temperature sensor are provided inside the measuring device. The environment temperature during charging is measured in real time by specifying the environment temperature during charging from the time required to charge the secondary cell and the environment temperature during charging. The measured analysis sample concentration is corrected for temperature with high accuracy from the environment temperature information obtained during charging, in a temperature correction step 09, and thus an analysis result with extremely high accuracy is obtained.

In US 2010/307208 A1, methods are disclosed of estimating the temperature of a reaction site on a measurement strip in a blood glucose measuring device. In one embodiment, a method includes determining an activation initiation time, an activation duration time, a thermal magnitude and a temperature elevation for heat generating components within a device. The temperature elevation for each of the heat generating components is determined at least in part by an impulse response matrix [Xi], the activation initiation time, the activation duration time and the thermal magnitude for each of the heat generating components. The method further includes determining a total temperature elevation of the glucose measuring device by summing the temperature elevation of each of the heat generating components, reading a temperature value provided by the temperature measuring element, and determining a reaction site temperature estimation by subtracting the total temperature elevation from the temperature value provided by the temperature measuring element.

US 6.203,191 refers to a method and apparatus for monitoring and controlling the temperature at the heat producing portion of an electrical current carrying device without direct measurement at the heat producing site. An integrated circuit is thermally attached to a plurality of heat dissipating paths; top side heat conduction path, bottom side heat conduction path, and board level heat conduction path. On one of the heat conduction paths exists a heat flow sensor. This sensor is comprised of an inner thermistor and an outer thermistor. The measured heat flow is combined with a single point temperature measurement and the thermal conductivity between the heat source and the temperature measurement point to produce the temperature at the heat source. This temperature is monitored in order to keep the temperature of the electrical current carrying device below critical levels or within a specified range.

Therefore it is seen as an object of the invention to further improve a portable electronic device with integrated sensors, particularly temperature sensors.

Summary of the Invention

In accordance with an aspect of the invention there is provided a portable electronic device with a housing in which one or more sensors are integrated and further including at least one heat flow sensor to measure the heat flow through the housing to the exterior and a compensator for compensating a measurement performed by the one or more sensors using heat flow measurement as provided by the heat flow sensor.

The heat flow sensor can be a heat flow or heat flux sensor, particularly a heat flux sensor with a thickness of less than 3 mm, preferably less than 1mm. The heat flow sensor can also be made from a pair or more linked temperature sensors such as thermistors. The temperature sensors are best arranged spaced apart along the main direction of the heat flow to be measured.

However, mobile devices are often built as thin as possible with the two main surfaces of the housing, herein referred to as front and back, separated by less than 10 mm or even less than 7 mm. In such devices the heat exchange with the environment is dominated by the exchange through the front and back of the housing while at the same time making it difficult to arrange the heat flux sensor or the pair or more temperature sensors at the optimum locations within the gap providing the shortest heat path between the heat source in question and the housing. As a solution for such housings it can be preferred to use a heat flow sensor or pair or more temperature sensors at locations outside the shortest heat paths between the heat source and the housing. The flow sensor or pair or more temperature sensors are placed in a direction different from the close to perpendicular to the main direction of the heat flow to the exterior.

In other words the heat flow sensor or pair of or more temperature sensors are arranged to measure a heat flow in direction towards an edge of the housing rather than towards its back or front. Such an arrangement is best accompanied by a model based calculator to determine heat flow in the main direction from the heat flow in perpendicular direction. Such a model best uses estimates or measurements of the thermal dissipation of the internal heat sources.

The compensator is a heat compensator compensating for the effects of internal heat sources on a sensor and/or a dynamic compensator compensating for the response time of the sensor so as to accelerate the measurement.

The portable electronic device can be a mobile phone, a handheld computer, an electronic reader, a tablet computer, a game controller, a pointing device, a photo or a video camera, a digital music player, a wrist watch, a key fob, a head set, a digital photo frame and a computer peripheral.

Other advantageous embodiments are listed in the dependent claims as well as in the description below. The described embodiments similarly pertain to the device, the method, and any computer program elements. Synergetic effects may arise from different combinations of the embodiments although they might not be described in detail.

Further all embodiments of the present invention concerning a method might be carried out in the order of the steps as described. Nevertheless this has not to be the only essential order of steps but all different orders of the method steps where technically feasible shall be comprised in the scope of the claims and be disclosed by the method claims.

Brief Description of the Drawings

The detailed description refers to examples of the present invention making reference to the annexed drawings, wherein:

    FIG. 1 shows a general diagram of heat flows inside the casing of a mobile phone;

    FIGs . 2A - 2B show various examples of a device in accordance with the invention; and

    FIGs. 3A - 3B and 4 show further details of a mobile phone with components used to implement an example of the invention.

Detailed Description

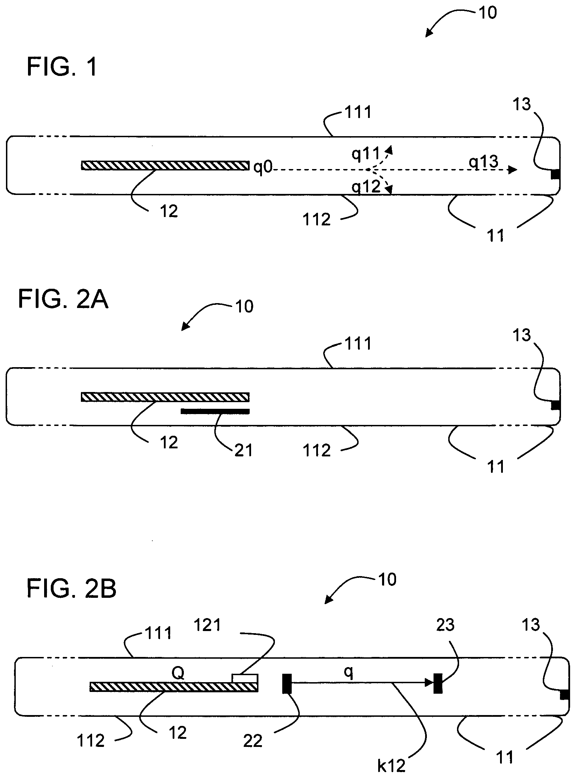

A general model of a portable electronic device 10 is shown in FIG. 1. The device is shown in a schematic cross-section perpendicular to its front 111 and back face 112. The housing or outer shell 11 of the device 10 has an aspect ratio of height (length) vs. thickness of about 5.0:0.3, i.e. in range of 10 to 20 with the height being the length of the longest edge and the thickness the length of the shortest edge of an approximately rectangular cuboid or box-shaped housing 11.

The device 10 has one or more components 12 generating heat when active. Such components include for example the processing unit, the battery, or the radio unit. A display can also be a heat source. Other active components with significantly less or negligible heat production, such as a temperature sensor 13, are also integrated into the housing 11.

For the error-free functioning of some of the components integrated into the housing it can be important to determine the heat or temperature distribution inside the housing. In other applications it can be useful to alert the user to a danger of a potential overheating.

In the example the temperature sensor 13 is designed to determine the ambient temperature outside the housing. However, such a measurement when performed simply by providing the reading of the sensor itself can be inaccurate because of the contributions of the internal heat sources to the temperature at the location of the sensor 13.

To reduce this error in the temperature as measured by the sensor 13, a model can be used to monitor the (potential) heat sources 12 and heat flows q inside the housing 11 to the sensor position.

Using an input and a heat transfer model which models the heat flows and heat conductivities within the device and through its housing using for example coupling constants to characterize the heat flow between a heat source 12 and the integrated temperature sensor 13, between the integrated temperature sensor 13 and the environment, and between the heat source 12 and the environment, the heat compensation system can generate a correction of a steady state temperature Ts of the integrated temperature sensor 13 so as to display a more correct approximation of the ambient temperature Ta outside the housing.

The heat compensation system can be implemented for example by a dynamic thermal model which can be mathematically described by a differential equation system. The model may in one embodiment comprise one or more, and preferably the most relevant heat sources, and in another embodiment additionally one or more, and preferably the most relevant thermal conductivities, and in another embodiment additionally one or more, and preferably the most relevant heat capacities, as well as it comprises the temperature sensor, and it may comprise one or more optional temperature sensors that may be available in the mobile device.

The ambient temperature Ta may then be estimated from these inputs by using the following equations [1] as compensator:

[1]

$$x(k+1) = Ax(k) + Bu(k)$$
$$y(k) = Cx(k) + Bu(k)$$

with u(k) denoting the inputs Ts at time step *k*, y(k) denoting the output Ta, and *x(k)* denoting an internal state vector of the compensator. *A* is an *n*-by-*n* matrix, *B* an *n*-by-*m* matrix, *C* an *1*-by-*n* matrix and *D* an *1*-by-*m* matrix, where *n* is the number of states that depends on the complexity of the model and m the number of inputs. Typical inputs may be, for example, an intensity of a display, a time derivative of a battery charge level, a central processing unit load, or other power management information. Additional temperature sensors at hot spots of the portable electronic device may improve the compensation results.

Hence, in one embodiment, the portable electronic device is modelled as a thermal system with heat sources, and optionally with heat capacities and/or thermal conductivities. From this model, a time-discrete heat compensator according to the state space description of equations [1] is derived, that can easily be implemented on a microprocessor of the portable electronic device by using the following software code:

```
        while not stopped
{
    u=Read_Input(); // Read input
    y=C*x+D*u; // Calculate output
    x=A*x+B*u; // State Update
    Ta = y; // Ambient Temperature = y
}
```

A model as described above can be implemented under the assumption that the heat capacities and thermal resistance or heat transfer coefficient of the elements and boundaries of the components of the device 10 including its housing 11 remain constant. Typically this can be seen as a valid assumption as internal components and the housing are usually not subject to change during the lifetime of the device. An important exception to the validity of the assumption is however the external housing or shell.

The housing can be in contact with many different interfaces for example an additional cover or protective sheets also often referred to as skin in the field of mobile phones and other digital media devices. Further changes can be caused by the surface on which a portable device is placed during use, e.g., on a table, the surface of which can be wooden, metal, or plastic material. In other cases the device may be placed or in contact with paper or fabric.

It can be easily seen from the schematic FIG. 1 how such a change has a significant impact on the heat flows. A heat flow q0 caused by an internal heat source 12 and propagating through the device 10 can be split into a component q13 arriving at the temperature sensor 13 and heat flows exemplarily indicated in the figure as q11 and q12 in direction of the outer shell 11. Given the above aspect ratios of the housing most of heat will be exchanged through the back face 112 and front face 111. It is therefore of particular importance to detect changes in the heat flow in these directions, in particular in direction of the back face 112 of the device under the assumption that the front face 111 is essentially a display and therefore not likely to be covered or otherwise change its thermal resistance during usage.

The direction from the heat source 12 to the back 112 is herein referred to as vertical direction and the direction from the heat source 12 to the temperature sensor as horizontal direction. The heat flows q11 and q12 are hence in vertical direction and the flow q13 in horizontal direction or in direction toward the edge of the housing. These nominal directions should be understood as main directions as the heat flows essentially omnidirectional from its source.

With these definitions several examples of possible embodiments are shown in the following FIGs. 2A and 2B.

In FIG. 2A, a direct heat flow or heat flux sensor 21 is used to determine the amount of heat flow from the heat source 12 in direction of the back 112 of the housing 11 of the portable electronic device 10. Such sensors are known as such and particularly thin heat flux sensors are commercially available, for example under the tradename gSKIN® in a thickness between 0.2mm and 0.4mm. The heat flux is calculated using the voltage generated by the sensor and a calibrated sensitivity, e.g. 1.9 $\mu$V/(W/m2) at 22.5°C.

In principle such a heat flux measurement by a dedicated sensor can be replaced with a pair of temperature sensors arranged as a spaced-apart pair in vertical direction with a known heat resistance between them in order to further minimize the size of the heat flux sensor.

It is however also possible to derive the heat flux through the housing 11 from internal temperature sensors and heat flux sensors which are located in directions other than the direct path between heat source and the housing. In an essentially flat structure as shown, it can be for example easier to measure a heat flow in horizontal direction. In the example of FIG. 2B a first thermistor 22 is located near the heat source and a second thermistor 23 further away in a mainly horizontal direction. The thermal resistance k12 between the two locations can be measured and is assumed to be known. Then the heat flow q along the path is defined by the temperature gradient.

The thermal power dissipation Q from the heat source is either known or can be estimated or measured. Measurements for important components such as the central processing unit CPU of a mobile device can often be derived using real-time values as provided by on-chip power monitors 121. Other components can be equipped with such monitors.

The relation between the heat flow q in the direction defined by the location of the two temperature sensors 22, 23 and the flow through the front and back is for example defined by the difference between the measured flow q and the flow as expected during a total thermal power dissipation Q of the heat source.

Knowledge of the heat transfer through the back and front can be used in various applications either directly or in combination with other measurements. It can provide for example an automated system for detecting the presence of a cover or skin. Further applications include the heat management of the device to predict overheating.

An important application is the improved compensation of an ambient temperature measurement as performed by integrated sensors within the device. Taking for example a heat compensation system as described above the model on which the compensation can be adjusted depending on the measurement of the heat transfer q(ext) to the environment.

For example the detection of a reduced heat exchange through the front and/or back as caused for example by a protective cover can be used to apply at least two different models with the first model representing the case of the device without cover and the second model the device with cover. Using the representation of such a model as in equations [1] above at least one of the values of A, B, or C differs between the models.

In a more complex variant the model can be continuously or step-wise adapted to the heat losses through the housing. In this variant at least one of the matrices A, B, C can be represented as a function of the heat transfer q(ext), e.g. as A = A(q(ext)) etc. or of any parameter equivalent to q(ext).

The dynamic compensation of a measurement can be based on a mathematically similar model using for example a dynamic compensation system as described in the cited '208 application, leading to system equations [2] identical in their mathematical structure to equation [1] above:

[2]

$$x(k+1) = Ax(k) + Bu(k)$$
$$y(k) = Cx(k) + Du(k)$$

where the orders of the matrices A, B, C and D represent the order of the compensation filter and the nature of the matrix coefficient depend on the underlying model of the sensor response with their values being chosen to reflect closest the modelled system.

The exact values for a compensator built on a system of equations such as equations [2] is a matter of the model chosen and its complexity. The measurement of the heat flux through the housing can determine for example the choice between a faster or a slower model differing in the time after which the temperature assumes its final value after a change in the ambient temperature.

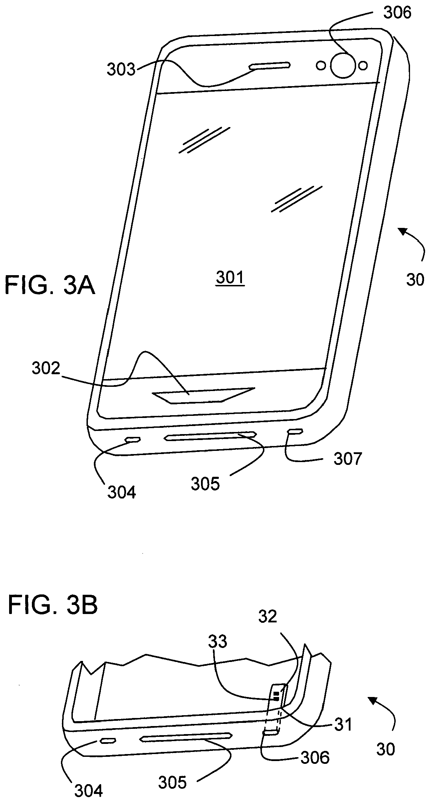

The above heat flux sensors can be integrated with a portable electronic device such as a mobile phone shown in FIGs. 3A and 3B. The housing 30 of the mobile phone includes a front side with a screen 301 and elements like buttons 302 to let a user interact with the phone. Also shown on the front side is an opening 303 for a loudspeaker. Further openings 304,305 are located at a lower side wall of the housing 30. It is well known to mount components like microphones and loudspeakers behind such openings. The phone includes one or two cameras 306, and internally additional sensors (not shown) such as location sensors or GPS, and acceleration and orientation sensors in a manner well known.

Another opening 307 is located at the lower side wall. As shown in FIG. 3B the opening 307 is linked to a tubular duct 31 passing through the interior of the housing. A temperature sensor 32 and a humidity sensor 33 are both mounted along the duct 31 such that the sensitive areas of both sensors are exposed to the ambient air through the opening 307. Suitable sensors are commercially available for example from Sensirion™ AG under the tradenames SHTC1 or STS21 (as temperature only sensor). The actual size and shape of the duct 31 depends on the volume available and the nature of the temperature sensor 32 and the humidity sensor 33 can vary, but given the physical constraints of portable mobile devices the area of the opening is typically in the range of less than 30 square millimeters and in the present example actually about less than 3.1 square millimeters.

A temperature sensor can also be mounted in a duct separate from the humidity sensor or flush with the housing of the phone or in the interior of the housing without any connection to the exterior.

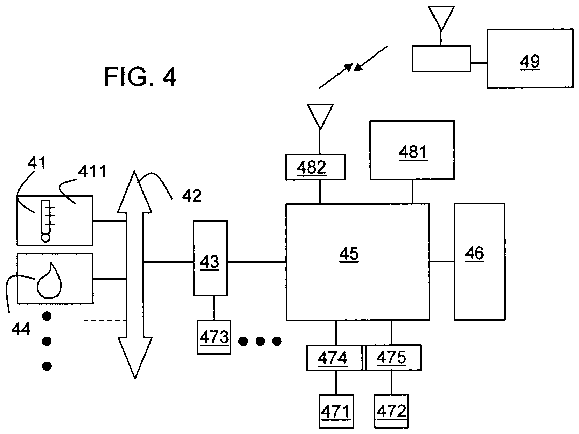

Fig. 4 shows a block diagram with the most important components of the portable device. In particular, the device includes a temperature sensor 41 integrated as part of a CMOS substrate 411 which has CMOS circuitry to control the basic functions and the basic readout of the sensor. The CMOS circuit can include for example the driver to switch the sensor and his heater on or off as well as A/D converters and amplifiers and an I2C bus controller to exchange data on an I2C bus 42. The I2C bus connects the sensors with a sensor hub 43. A further humidity sensor 44 is also linked to the I2C bus 42. The sensor hub 43 provides a control and processing unit for more complex control and read-out functions of the temperature sensor 41 based on signals sent to or extracted from, respectively, the on-chip CMOS circuitry. The sensor hub 43 also controls other auxiliary sensors such as GPS, magnetometers, accelerometers and the like.

Further control and read-out function can also be performed by the central processing unit (CPU) 45 of the portable device, which in turn has read/write access to a memory 46, which can include static or volatile memory or both as known in the art. The memory 46 typically stores the operating system of the device and can also be used to store application programs specific to the operation of the sensors of the portable device. The functions performed by the sensor hub and the sensor specific programs and program libraries as stored and executed by the CPU 45 form a temperature processing unit capable of transforming the measurements of the sensor into a result which can be displayed or otherwise communicated to the user of the portable device.

The components and executable code required to perform a heat compensation as described above or for a dynamic compensation as described for example in the above cited '208 application can reside in the memory 46 and be executed by the CPU 45.

The memory 46 and be executed by the CPU 45 can also be used to store and run executable code for a heat compensator applied to the sensor signals to correct the temperature as directly measured to compensate for effects of the surrounding of the sensor inside the portable device or external to it and/or for a dynamic compensator to compensate for effects caused by the response time of the sensor.

In one embodiment, the one or more integrated sensors include the compensator for reducing the effects of the one or more internal heat sources, with the compensator including one or more modes selected depending on the heat flux measurement and/or for reducing the effects of the dynamic response of the sensor with the compensator including one or more modes selected depending on the heat flux measurement.

While there are shown and described presently preferred embodiments of the invention, it is to be understood that the invention is not limited thereto but may be otherwise variously embodied and practised within the scope of the following claims. For example it is possible to provide a plurality of flux sensors distributed with the housing to refine the heat flow measurements and thus derive a map of the heat flow through the exterior shell.

**Claims**

1. A portable electronic device (10) comprising

   - one or more integrated sensors (13) and one or more internal heat sources (12) within a common housing (11, 30), wherein the one or more integrated sensors comprise a temperature sensor (13),
   - a heat flux sensor (21, 22, 23) to measure a heat flux originating from the one or more internal heat sources (12) through the housing (11, 30) to an exterior (111, 112) of the housing (11, 30),
   - a compensator (45, 46) for reducing the effects of the one or more internal heat sources (12) on the temperature sensor (113), with the compensator (45, 46) including one or more compensation modes selected depending on the heat flux measured, and/or a compensator for reducing the effects of a dynamic response of the sensor (13) by compensating for the response time of the temperature sensor (13) so as to accelerate the measurement, with the compensator (45, 46) including one or more compensation modes selected depending on the heat flux measured.

2. The device according to claim 1, wherein the heat flux sensor (21) is located to measure the flow from the one or more internal heat sources (12) to the back or front of the housing (11) directly.

3. The device according to claim 1, wherein the heat flux sensor (22, 23) is located to measure the flow from the one or more internal heat sources (12) to the back or front of the housing (11) by measurement of the heat flow in a direction essentially perpendicular to the direct heat flow to the back or front of the housing (11).

4. The device according to claim 3, wherein the heat flux sensor comprises at least two temperature sensors (22, 23) located at a different distance from an edge of the housing (11).

5. The portable electronic device (10) according to any of the preceding claims, being selected from a group comprising:

   a mobile phone,
   a handheld computer,
   an electronic reader,
   a tablet computer,
   a game controller,
   a pointing device,
   a photo or a video camera,
   a digital music player,
   a wrist watch,
   a key fob,
   a head set,
   a picture frame
   and a computer peripheral.

6. A method for compensating a measurement performed by a temperature sensor (13) integrated within a housing (11, 30) of a portable electronic device (10), with one or more internal heat sources (12) within the housing (11, 30), the method comprising the steps of

   - measuring a temperature using one or more integrated temperature sensors (13),
   - measuring a heat flux originating from the one or more internal heat sources (12) through the housing (11, 30) to an exterior (111, 112) of the housing (11, 30) using a heat flux sensor (21, 22, 23),
   - providing different compensation modes, and
   - compensating the temperature measurement by changing depending on the measured heat flux through the housing (11, 30) to the exterior (111, 112) between the different compensation modes,

   wherein compensating the temperature measurement includes reducing effects of one or more internal heat sources (12) on the temperature sensor (13) by means of a dynamic thermal model, and/or includes reducing effects of a dynamic response of the sensor (13) by compensating for the response time of the temperature sensor (13) so as to accelerate the measurement, by means of a model.

7. The method of claim 6, wherein the heat flux is determined using power or thermal dissipation values as measured at the one or more internal heat sources (12).

8. The method of claim 7, wherein the heat flux is determined using at least two internal temperature measurements measured at different distances from an edge of the housing (11, 30).

9. Usage of a device according to any of the preceding claims 1 to 5, as an automated system for detecting the presence of a cover around the housing (11, 30).

**Patentansprüche**

1. Eine tragbare elektronische Vorrichtung (10) umfassend

   - einen oder mehrere integrierte Sensoren (13) und eine oder mehrere interne Wärmequellen (12) in einem gemeinsamen Gehäuse (11, 30), wobei der eine oder die mehreren integrierten Sensoren (13) einen Temperatursensor (13) umfassen,
   - einen Wärmeflusssensor (21, 22, 23) um einen Wärmefluss, der von der einen oder von den mehreren internen Wärmequellen (12) stammt, durch das Gehäuse (11, 30) zu einem Aussenbereich (111, 112) des Gehäuses (11, 30) zu messen,
   - einen Kompensator (45, 46) zur Reduzierung der Effekte der einen oder der mehreren internen Wärmequellen (12) auf dem Temperatursensor (113), wobei der Kompensator (45, 46) einen oder mehrere Kompensationsmodi einschliesst, die in Abhängigkeit vom gemessenen Wärmefluss ausgewählt werden, und/oder einen Kompensator zur Reduzierung der Effekte einer dynamischen Antwort des Sensors (13) durch Kompensation der Ansprechzeit des Temperatursensors (13), um die Messung zu beschleunigen, wobei der Kompensator (45, 46) einen oder mehrere Kompensationsmodi einschliesst, die in Abhängigkeit vom gemessenen Wärmefluss ausgewählt werden.

**2.** Die Vorrichtung nach Anspruch 1, wobei der Wärmeflusssensor (21) zur direkten Messung des Flusses von der einen oder von den mehreren internen Wärmequellen (12) zum hinteren Teil oder zum vorderen Teil des Gehäuses (11) angeordnet ist.

**3.** Die Vorrichtung nach Anspruch 1, wobei der Wärmeflusssensor (22, 23) zur Messung des Flusses von der einen oder von den mehreren internen Wärmequellen (12) zum hinteren Teil oder zum vorderen Teil des Gehäuses (11) angeordnet ist, indem der Wärmefluss in einer Richtung die im Wesentlichen senkrecht zum direkten Wärmefluss ist, zum hinteren Teil oder vorderen Teil des Gehäuses (11) hin gemessen wird.

**4.** Die Vorrichtung nach Anspruch 3, wobei der Wärmeflusssensor mindestens zwei Temperatursensoren (22, 23) umfasst, die in einem unterschiedlichen Abstand von einem Rand des Gehäuses (11) angeordnet sind.

**5.** Die tragbare elektronische Vorrichtung (10) nach einem der vorangehenden Ansprüche, ausgewählt aus einer Gruppe umfassend:

ein Mobiltelefon,
einen Taschencomputer,
ein elektronisches Lesegerät,
ein Tablett,
eine Spielkonsole,
ein Zeigegerät,
eine Foto- oder eine Videokamera,
ein digitales Abspielgerät,
eine elektronische Armbanduhr,
einen Schlüsselanhänger,
ein Headset,
eine Computerperipherie.

**6.** Ein Verfahren für die Kompensation einer Messung die von einem Temperatursensor (13) durchgeführt wird, der in einem Gehäuse (11, 30) der tragbaren elektronischen Vorrichtung (10) integriert ist, mit einer oder mit mehreren internen Wärmequellen (12) im Gehäuse (11, 30), wobei das Verfahren die folgenden Schritte umfasst:

- Messen einer Temperatur mit Hilfe eines oder mehrerer integrierter Temperatursensoren (13),
- Messen eines Wärmeflusses, der von der einen oder von den mehreren internen Wärmequellen (12) stammt, durch das Gehäuse (11, 30) in einen Aussenbereich (111, 112) des Gehäuses (11, 30) mittels des Wärmeflusssensors (21, 22, 23),
- Bereitstellen von verschiedenen Kompensationsmodi, und
- Kompensieren der Temperaturmessung durch Umschaltung zwischen den verschiedenen Kompensationsmodi in Abhängigkeit vom gemessenen Wärmefluss durch das Gehäuse (11, 30) in den Aussenbereich (111, 112),

wobei die Kompensation der Temperaturmessung eine Reduzierung von Auswirkungen einer oder mehrerer internen Wärmequellen (12) auf den Temperatursensor (13) mittels eines dynamischen Thermikmodells einschliesst, und/oder eine Reduzierung von Auswirkungen auf eine dynamische Antwort des Sensors (13) durch Kompensation der Ansprechzeit des Temperatursensors (13) einschliesst, um auf diese Weise die Messung zu beschleunigen, mittels eines Modells.

**7.** Das Verfahren nach Anspruch 6, wobei der Wärmefluss mittels an der einen oder an den mehreren internen Wärmequellen (12) gemessenen Leistungs- oder Wärmeverlustwerten bestimmt wird.

**8.** Das Verfahren nach Anspruch 7, wobei der Wärmefluss mittels der Verwendung von mindestens zwei internen Temperaturmessungen, die in unterschiedlichen Abständen von einem Rand des Gehäuses (11, 30) bestimmt wird.

**9.** Verwendung einer Vorrichtung nach einem der vorangehenden Ansprüche 1 bis 5 als automatisiertes System zur Detektierung der Anwesenheit einer Abdeckung um das Gehäuse (11, 30) herum.

**Revendications**

**1.** Un dispositif électronique portable (10) comprenant

- un ou plusieurs capteurs intégrés (13) et une ou plusieurs sources de chaleur internes (12) avec une carcasse commune (11, 30), l'un ou les plusieurs capteurs intégrés comprenant un capteur de température (13),
- un capteur de flux de chaleur (21, 22, 23) pour mesurer un flux de chaleur provenant de l'une ou des plusieurs sources de chaleur internes (12) à travers la carcasse (11, 30) vers un extérieur (111, 112) de la carcasse (11, 30),
- un compensateur (45, 46) pour réduire les effets de l'une ou des plusieurs sources de chaleur internes (12) sur le capteur de température (113), le compensateur (45, 46) incluant un ou plusieurs modes de compensation sélectionnés dépendant du flux de chaleur mesuré, et/ou un compensateur pour réduire les effets d'une réponse dynamique du capteur (13) en compensant le temps de réaction du capteur de température (13) afin d'accélérer la mesure, le compensateur (45, 46) incluant un ou plusieurs modes de compensation sélectionnés dépendant du flux de chaleur mesuré.

2. Le dispositif selon la revendication 1, le capteur de flux de chaleur (21) étant situé de manière à mesurer directement le flux à partir de l'une ou des plusieurs sources de chaleur internes (12) jusqu'à l'arrière ou l'avant de la carcasse (11).

3. Le dispositif selon la revendication 1, le capteur de flux de chaleur (22, 23) étant situé de manière à mesurer le flux à partir de l'une ou des plusieurs sources de chaleur internes (12) jusqu'à l'arrière ou l'avant de la carcasse (11) en mesurant le flux de chaleur dans une direction essentiellement perpendiculaire au flux de chaleur direct vers l'arrière ou l'avant de la carcasse (11).

4. Le dispositif selon la revendication 3, le capteur de flux de chaleur comprenant au moins deux capteurs de température (22, 23) situés à une distance différente du bord de la carcasse (11).

5. Le dispositif électronique portable (10) selon l'une des revendications précédentes, étant sélectionné du groupe comprenant:

   un téléphone portable,
   un ordinateur portable,
   un lecteur électronique,
   une tablette,
   un contrôleur de jeu,
   un dispositif de pointage,
   une caméra photo ou vidéo,
   un lecteur de musique digital,
   une montre à bracelet,
   un porte-clés,
   une casque-micro,
   un cadre de photos,
   et une périphérie d'ordinateur.

6. Un procédé pour compenser une mesure effectuée par un capteur de température (13) intégré dans une carcasse (11, 30) d'un dispositif électronique portable (10), avec une ou des plusieurs sources de chaleur internes (12) à l'intérieur de la carcasse (11, 30), le procédé comprenant les étapes

   - de mesurer une température en utilisant un ou plusieurs capteurs de température intégrés (13),
   - de mesurer un flux de chaleur provenant de l'une ou des plusieurs sources de chaleur internes (12) à travers la carcasse (11, 30) vers un extérieur (111, 112) de la carcasse (11, 30) en utilisant un capteur de flux de chaleur (21, 22, 23),
   - de fournir des différents modes de compensation, et
   - de compenser la mesure de température en changeant entre les différents modes de compensation dépendant du flux de chaleur mesuré à travers la carcasse (11, 30) vers l'extérieur (111, 112),

la compensation de la mesure de température incluant une réduction des effets d'une ou des plusieurs sources de chaleur internes (12) sur le capteur de température (13) à l'aide d'un modèle thermique dynamique, et/ou incluant une réduction des effets d'une réponse dynamique du capteur (13) en compensant le temps de réponse du capteur de température (13) afin d'accélérer la mesure, à l'aide d'un modèle.

7. Le procédé selon la revendication 6, le flux de chaleur étant déterminé en utilisant des valeurs de dissipation de puissance ou thermiques, selon la mesure à l'une ou aux plusieurs sources de chaleur internes (12).

8. Le procédé selon la revendication 7, le flux de chaleur étant déterminé en utilisant au moins deux mesure internes de température mesurés à des distances différentes d'un bord de la carcasse (11, 30).

9. Utilisation d'un dispositif selon l'une des revendications précédentes 1 à 5 comme système automatisé pour détecter la présence d'une couverture autour de la carcasse (11, 30).

FIG. 1

FIG. 2A

FIG. 2B

FIG. 3A

FIG. 3B

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110307208 A1
- WO 2013045897 A1
- EP 2682715 A1
- US 2011119018 A1
- US 2010268475 A1
- US 2010307208 A1
- US 6203191 B